# EUROPEAN PATENT APPLICATION

(11) **EP 4 327 652 A1**
(43) Date of publication of application: **28.02.2024**
(21) Application number: 23192172.7
(22) Date of filing: 18.08.2023
(51) Int. Cl.: A01K 1/00, A01K 31/00, A01K 31/07, A01K 31/18, A01K 31/22, A01K 31/08

(54) **SELF-PROPELLED POULTRY HOUSE**

(30) Priority: 18.08.2022 DK PA202270410
(71) Applicant: Junker, Gerd Thorstein Bruun, 8464 Galten (DK)
(72) Inventor: Bruun, Junker Gerd Thorstein, 8464 Galten (DK)
(74) Representative: Plougmann Vingtoft a/s

(57) **Abstract**

A mobile self-propelled poultry house (4) comprising a frame being configured to carry the poultry house, the frame comprising a plurality of elongate elements (5) extending in a longitudinal direction, wherein the elongate elements, the frame being connected at a first preselected position to a propelling device (1) comprising a first boom (2), a second boom (3) rotatably connected to the first boom (2), a ground penetrating element (6) rotatably attached to one end of the second boom (3), a force generating element (1) rotatably connected to the frame and a power unit connected to the force generating element (1), wherein the propelling device is configured to move the poultry house from one geographical position to another geographical position.

## Description

### FIELD OF THE INVENTION

The present invention relates to a poultry house, more specifically the present invention relates to a mobile poultry house having a propelling device for moving the poultry house.

### BACKGROUND OF THE INVENTION

Food safety and animal health have received more focus, and especially poultry farming, which predominantly is carried out inside a house, in order to control the environment around the poultry, the disease load of a flock is of importance and often an issue. Stationary poultry houses are difficult to keep clean and free from disease, as the environment and the circulation of air is often in a closed system that provides better conditions for developing diseases. Especially, the underlying ground can be problematic, if the poultry house is stationary, as the manure stacks. One solution to this problem is to move the poultry house around, such that the ground and the environment around the poultry house change frequently. There have been several attempts to reach a solution solving the above mentioned problem. But known attempts in the art are poor as they require at least one vehicle in order to move the poultry house, making the attempts time consuming for the farmer, which results in a limited amount of times the farmer moves the poultry house within a year. Another issue with mobilising poultry farming is the technical installations. Especially, technical installations regarding electricity used to power the poultry house by providing light and heat, water supply and control of manure is of importance in a healthy poultry farm, and have been an issue with respect to mobility of a poultry farm.

Hence, an improved mobile poultry house would be advantageous, and in particular self-propelling mobile poultry house that is more efficient would be advantageous.

### OBJECT OF THE INVENTION

It is a further object of the present invention to provide an alternative to the prior art.

In particular, it may be seen as an object of the present invention to provide a self-propelled poultry house that solves the above mentioned problems of the prior art with limited mobility due to involvement of vehicles, and fixed technical installations.

### SUMMARY OF THE INVENTION

Thus, the above described object and several other objects are intended to be obtained in a first aspect of the invention by providing a mobile self-propelled poultry house comprising a frame arranged underneath the poultry house and being configured to carry the poultry house, the frame comprising a plurality of elongate elements extending in a longitudinal direction and connected to each other by transverse going connection means, wherein the elongate elements are configured to have a slidable surface at least on an outer surface facing towards the ground, the frame being connected at a first preselected position to a propelling device, the propelling device comprising
∘ an extending element comprising a first boom and a second boom, wherein the second boom is rotatably connected to the first boom at a second preselected position along the second boom;
∘ a ground penetrating element rotatably attached to one end of the second boom and configured to be ground penetrating;
∘ a force generating element rotatably connected in one end to the frame at a third preselected position and in the other end rotatably connected to the second boom at a fourth preselected position; and
∘ a power unit connected to the force generating element and further configured to be connectable to an electricity source, such as a battery;
wherein the propelling device is configured to move the poultry house from one geographical position to another geographical position.

In the context of the present invention, poultry may be understood as ducks, guinea fowls, geese, turkey, chickens and hens.

The invention is particularly, but not exclusively, advantageous for obtaining a mobile poultry house that provides less diseases in the poultry flock, while providing a mobile poultry house that is self-moving.

In one embodiment of the invention, the elongate elements are tubular.

In another embodiment of the invention, the elongate elements are filled with a material with a density above 500 kg per m³, such as a density above 800 kg per m³, such as a density above 1000 kg per m³, preferably a high-density material, preferably the high-density material is concrete, such as a density being higher than the density of water.

In another embodiment of the invention, the elongate elements are made of a polymeric material, such as a synthetic plastic, such as a biopolymer.

The invention is particularly, but not exclusively, advantageous for obtaining a stable frame with a high load-carrying capacity, while having smooth surface with limited friction and minimal corrosion.

In another embodiment of the invention, the poultry house further comprising at least one rolling device, such as a wheel, such as a caterpillar wheel connected to the frame.

In another embodiment of the invention, the poultry house further comprises a second propelling device connected to the frame on a fifth preselected position, preferably the fifth preselected position is on a side of the frame being the same side as the first preselected position.

The invention is particularly, but not exclusively, advantageous for obtaining a mobile self-propelled poultry house with unique manoeuvrability when moving.

In another embodiment of the invention, the first and second propelling devices are arranged at opposite sides of the frame.

In another embodiment of the invention, the propelling devices are operated independently of each other.

In another embodiment of the invention, the first and/or second propelling devices are detachably connected to the frame.

In another embodiment of the invention, the force generating element is hydraulically operated.

The invention is particularly, but not exclusively, advantageous for obtaining a mobile self-propelled poultry house that is moveable using a renewable energy source.

In another embodiment of the invention, the frame further comprises tubular fluid container arranged between the elongate elements and configured to contain a fluid, such as water, such as drinking water.

The invention is particularly, but not exclusively, advantageous for obtaining a poultry house with a mobile temperature controlled water supply.

In another embodiment of the invention, the poultry house moves from one geographical position to another geographical position based on a received signal comprising a GPS location.

The invention is particularly, but not exclusively, advantageous for obtaining a mobile self-propelling poultry house that can be controlled online.

In another embodiment of the invention, the slidable surface is made from a material having a low coefficient of friction, preferably further lowered by the application of a lubricant, such as a light oil, such as wax, such as silicone.

In the context of the present invention, low friction surface may be understood as being any type of surface where the underlying ground easily, slidably or rollably displace along the surface with minimal frictional adhesion between the surface and underlying ground.

The invention further relates to a method being adapted to enable moving of a mobile poultry house according to a second aspect of the invention, the method comprises
- providing a poultry house;
- sending a signal to move the poultry house from one geographical position to another geographical position, preferably the signal includes a GPS position of the targeted geographical position;
- receiving the signal by a receiver in the power unit;
- activating the propelling device by placing ground penetrating element in the ground;
- activating the propelling device by extending the force generating element, so as to provide a propulsion of the poultry house;
- Activating the propelling device by retracting the force generating element into a neutral position, while the ground penetrating element is not placed in the ground; thereby moving the mobile poultry house.

This aspect of the invention is particularly, but not exclusively, advantageous in that the method according to the present invention may be implemented by connecting a propelling device to a mobile poultry house, to provide a self-propelling poultry house.

The first and second aspect of the present invention may each be combined with any of the other aspects. These and other aspects of the invention will be apparent from and elucidated with reference to the embodiments described hereinafter.

### BRIEF DESCRIPTION OF THE FIGURES

The mobile poultry house according to the invention will now be described in more detail with regard to the accompanying figures. The figures show one way of implementing the present invention and are not to be construed as being limiting to other possible embodiments falling within the scope of the attached claim set.
Figure 1 is divided into figures 1A-1C that illustrate a propelling device connected to a poultry house and propelling device configurations, according to an embodiment of the invention.
Figure 2 is a cross-sectional view of a mobile self-propelled poultry house according to an embodiment of the invention.
Figure 3 is a cross-sectional view of a mobile self-propelled poultry house according to an embodiment of the invention.

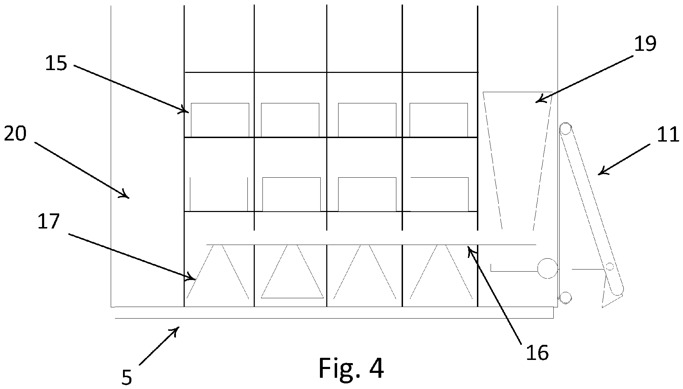

Figure 4 is a side view of an inner compartment of a poultry house, according to an embodiment of the invention.
Figure 5 is a front view of a mobile self-propelled poultry house with two propelling devices, according to an embodiment of the invention.
Figure 6 is a side view of a propelling device according to an embodiment of the invention.
Figure 7 is a cross-section view of a mobile self-propelled poultry house comprising a poultry run in a lifted configuration according to an embodiment of the invention.
Figure 8 is a cross-section view of a mobile self-propelled poultry house comprising a poultry run in a lowered configuration according to an embodiment of the invention.

### DETAILED DESCRIPTION OF AN EMBODIMENT

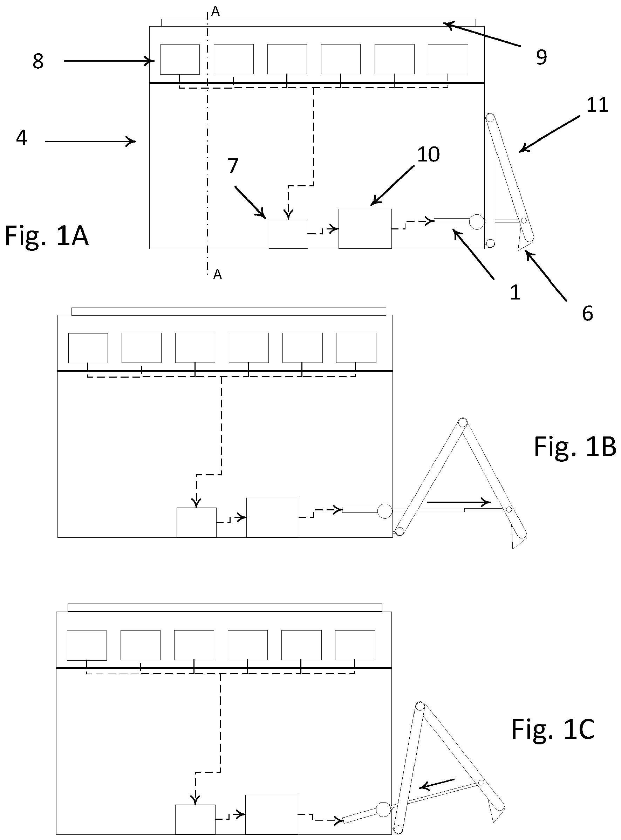

With reference to figure 1A, a side view of a self-propelled poultry house according to an embodiment of the invention is illustrated. The self-propelled poultry house illustrated comprises a propelling device 11, which is connected to an outer side of the poultry house 4. The propelling device has a first boom 2 and a second boom 3, where the second boom is rotatably connected to the first boom 2. The propelling device further comprises a ground penetrating element 6 rotatably connected to one end of the second boom 3. The ground penetrating element 6 is configured to be ground penetrating, at least when a force is applied to one end of ground penetrating element, preferably, the end of the ground penetrating element 6 being farthest away from the ground when the ground penetrating element 6 is arranged above the ground. In some embodiments, the propelling device may comprise a plurality of booms, such as three booms, such as four booms, where each boom is connected to a nearby boom.

Preferably, the propelling device 11 is connected to a frame arranged underneath the poultry house. In some embodiments, the frame is arranged at least partly within the poultry house. The propelling device 11 is typically operated by a force generating element 1, which is powered by a power unit 10, preferably a hydraulic motor 10. The power unit is typically arranged within the poultry house, but may in some embodiments be arranged outside the poultry house. The power unit controls the amount of power to be delivered to the force generating element. The amount of power may be influenced by the ground properties, such as type of ground, such as mud, such as sand, such as grass, and also the weight of the poultry house.

In some embodiments, the force generating element 1 is operated by other types of actuators, such as an electric motor, such as a thermal actuator, such as an electric actuator, such as a pneumatic actuator. The force generating element 1 is typically telescopic, so as to be able to extend and contract in one direction. The motor 10 is connected to a battery 7 for receiving electricity. In this specific embodiment, the battery 7 is receiving electricity from one or more solar panels 8 arranged on the roof of the poultry house 4, connected to each other and the battery 7. By having solar panels arranged on the roof of the poultry house, the poultry house can be self-supplying in terms of power.

Preferably, but not limited to, a poultry house is sized according to specific uses and national law. Typically, a poultry house is 100 m² or less. In one embodiment, the length of a poultry house is 30 m or less, such as 20 m or less, such as 15 m or less, such as 10 m or less, and the width of a poultry house is 20 m or less, such as 15 m or less, such as 10 m or less, such as 5 m or less, and the height of the poultry house is 12 m or less, such as 10 m or less, such as 7 m or less, such as 5 m or less, but any of the dimensions are not below 1 m. In other embodiments, the dimensions may be smaller than 1 m.

Typically, a power unit of a poultry house is connected to a computer unit, which can be configured to receive and send instructions to the power unit, so as to move the ground. The computer unit may be arranged within the poultry house or outside the poultry house, and connected to the energy storage medium, such as the battery, arranged in the poultry house. The computer unit may operate based on a preselected schedule, or by receiving inputs from a user. The inputs may be received from another computer unit arranged at another geographical position, or may be provided directly to the computer unit. Typically, the computer unit will operate based in a geographical position system, so as to move within preselected boundaries. The preselected boundaries may be in the form of a restricted area, such as a garden, such as a field. Thereby, the poultry house is capable of moving from one geographical position to another geographical position, to limit the stress applied to the ground underneath a poultry house and the risk of disease in the flock, which is increasing when a poultry house is stationary, with respect to its geographical position.

The first, second, third, fourth and fifth preselected positions may be selected based on a preselected design.

Figure 1A-1C illustrates embodiments of propelling a poultry house using the propelling device 11, wherein figure 1A illustrates the propelling device in a neutral configuration, in which a ground penetrating element 6 rotatably attached to one end of the propelling device 11 is arranged above the ground. Figure 1B illustrates an extending configuration, wherein the ground penetrating element is arranged in the ground and the force generating element 1 is extending, such that the poultry house is being pushed in a direction opposite to the position of the propelling device or the ground penetrating element, as a result of the force generating element being positioned in the ground, while the force generating element is extending. In figure 1C a returning configuration is illustrated, wherein the ground penetrating element is removed from the ground, and the force generating element 1 is contracting from an extended position, to return to the neutral configuration.

In some embodiments, the ground penetrating element is arranged in the ground when the force generating element contracts, such as to provide a pull of the poultry house in the direction of the ground penetrating element.

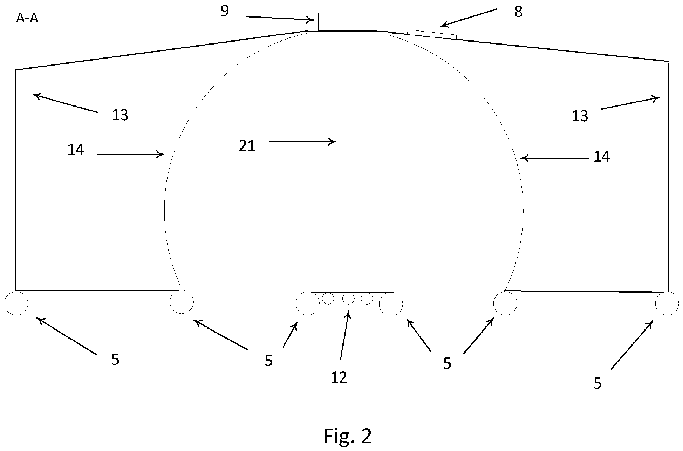

With reference to figure 2, a cross-sectional view of a self-propelled poultry house 4 is illustrated according to an embodiment of the invention. The poultry house 4 comprising a frame arranged underneath the poultry house, preferably being configured to carry the poultry house 4. The frame comprising a plurality of elongate elements 5 extending in a longitudinal direction in relation to the poultry house 4 and connected to each other by transverse going connection means, such as rods, such as bars, such as bolts, not illustrated. The elongate elements 5 are configured to have a slidable surface, being a smooth surface, at least on an outer surface of the elongate elements 5, being the surface facing towards the ground, such that the poultry house is moveable along the surface of the ground. The outer surface of the elongate elements 5 is made in a low friction material, such as PVC. In some embodiments, the elongate elements 5 are made of a polymeric material, such as a synthetic plastic, such as a biopolymer, in order to limit wear of the elongate elements, such as by limiting corrosion, and preferably filled with a high-density material, being a material having a density higher than the density of water (997 kg per m³). In other embodiments, the elongate elements are filled with a material with a density above 500 kg per m³, such as a density above 800 kg per m³, such as a density above 1000 kg per m³, preferably a high-density material, preferably the high-density material is concrete.

In one embodiment of the invention, a self-propelled poultry house as illustrated in figure 2 comprises fluid containers 12 arranged underneath the poultry house. The fluid containers 12 are preferably arranged within the at least two elongate elements 5 arranged under the inner compartment 21 of the poultry house. The fluid containers 12 typically containing water, such as drinking water, which can be kept cold during summer and warm during winter, due to its arrangement underneath the poultry house and close to the ground. The outer geometries of the poultry house is defined by the outer elements 13, preferably being outer walls, and a roof. Outer walls are defined as walls arranged either in a longitudinal direction of the poultry house or in a transversal direction of the poultry house, both type of walls having a height in the vertical direction of the poultry house. Inside, the poultry house comprises an inner compartment 21 and connecting elements 14. The inner compartment 21 comprises nesting boxes and feed container(s) for the animals, while the connecting elements 14 stabilise the poultry house. The amount of connecting elements 14 is preselected according to the dimensions of the poultry house. Preferably, the connecting elements 14 are semi-circular shaped, but in some embodiments, the connecting elements are straight.

In some embodiments, the fluid containers and/or the elongate elements 5 are tubular.

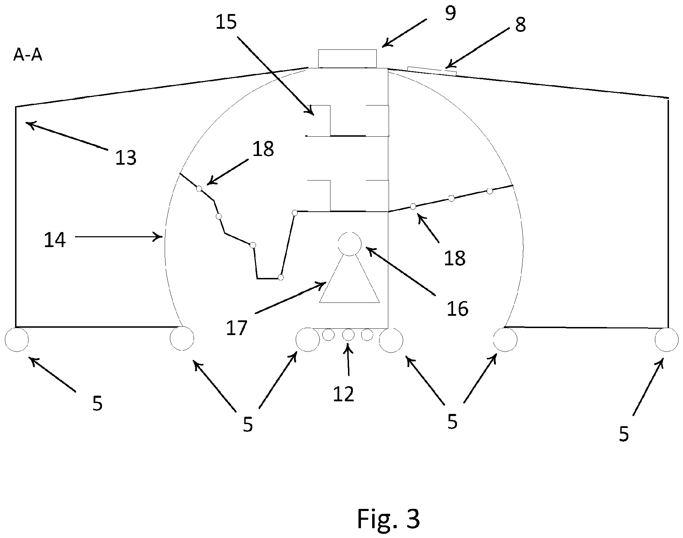

With reference to figure 3, a cross-sectional view of a mobile self-propelled poultry house is illustrated. The mobile self-propelled poultry house comprises outer elements 13 connected to the roof and connected to a ground element extending between two elongate elements 5. The roof is further connected to the connecting element 14 and/or to an inner compartment 21. The connections may partly be hinged so as to allow the mobile self-propelled poultry house to be flat packed. The mobile self-propelled poultry house may be stored and transported in a flat packed configuration, being a configuration where at least partly of the mobile self-propelled poultry house is collapsed and or separated in the hinged connections.

The hinged connections may be arranged so as to allow the mobile self-propelled poultry house to be flat packed in a configuration requiring minimum space. The hinged connections may also be arranged so as to allow the mobile self-propelled poultry house to be flat packed in a configuration requiring minimum effort to assemble.

The ground element is typically a floor that comprises a floor material suitable for poultry, such as sand, such as sawdust.

The poultry can typically move freely around inside the mobile self-propelled poultry house through passages or openings between different spaces inside the mobile self-propelled poultry house,

In one embodiment, the perch 18 is arranged between the connecting element 14 and the inner compartment 21, and configured so that poultry can rest on the perch 18, while faeces can go through cavities between the perches, so as to fertilize the underneath ground. From the inner compartment 21 poultry can move through a passage, not shown, to the perch 18, and from the perch 18 to the area between the outer element 13 and the connecting element 14. Poultry are thereby typically free to move inside the mobile self-propelled poultry house, so as to increase the welfare of the poultry.

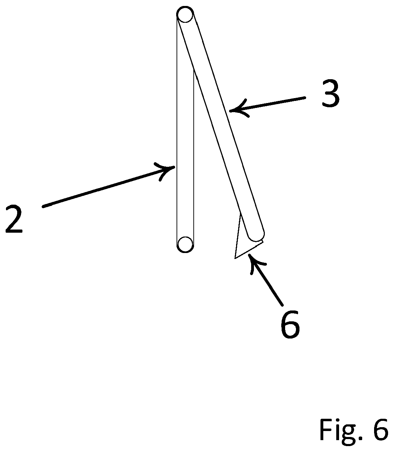

With reference to figure 6, one embodiment of the propelling device is illustrated. The propelling device comprises an extending element comprising a first boom 2 and a second boom 3, wherein the second boom 3 is rotatably connected to the first boom 2. The length of one the booms 2, 3 can be different to the length of the other of the booms 2, 3. The booms 2, 3 are connected at a preselected position along both the first and the second boom 2, 3. The propelling device 11 further comprises a ground penetrating element 6 rotatably attached to one end of the second boom 3 and configured to be ground penetrating. Ground penetrating is defined as being ground intrusive, such that the ground penetrating element 6 when penetrating the ground, is arranged at least partly in the ground. The second boom 3 is typically rotatably connected to a force generating element 1 at a fourth preselected position and to the frame a third preselected position. In some embodiments, the force generating element is rotatably connected directly to the poultry house at a third preselected position. The propelling device 1 is configured to move the poultry house from one geographical position to another geographical position, by either pushing or pulling the poultry house, as a result of placing the ground penetrating element 6 in the ground and activating the force generating element as illustrated in figure 1A-1C.

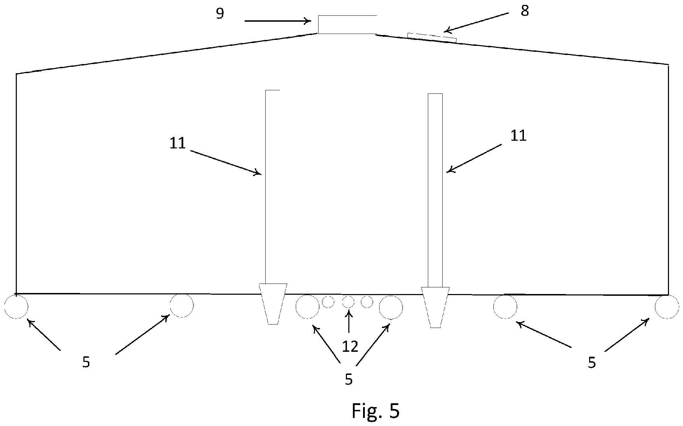

With reference to figure 5, one embodiment of the invention is illustrated, wherein the self-propelled poultry house 4 comprises two propelling devices 11. The two propelling devices can be arranged on the same end of the poultry house or be arranged in opposite ends of the poultry house. The first and second propelling device 11 is rotatably connected to either the frame of the poultry house or directly to one end of the poultry house. In some embodiments, at least one of the propelling devices 1 are detachable connected.

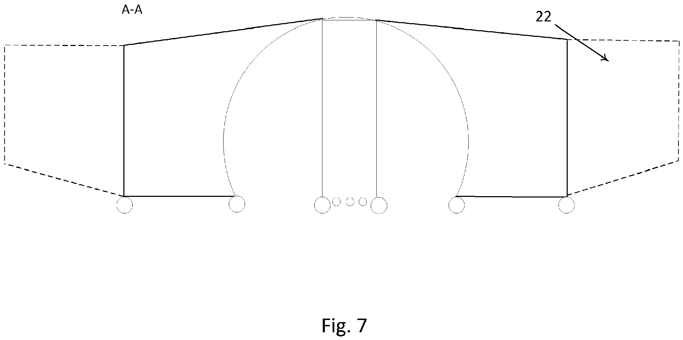

With reference to figure 7, one embodiment of a poultry run 22 arranged on the outer element 13 is illustrated. In the illustrated embodiment, the poultry run 22 is in a lifted configuration, where the bottom of the poultry run 22 is above the ground level. The poultry run 22 is typically made of a mesh material, so that air and other small components, such as grass can pass through the holes in the mesh, while keeping predators, birds and poultry from outside the mobile self-propelled poultry house away from the poultry located on the inside of the mesh. The poultry run 22 is connected to the outer element 13, so that poultry can move from the space between the connecting elements 14 and the outer element 13 into the poultry run 22.

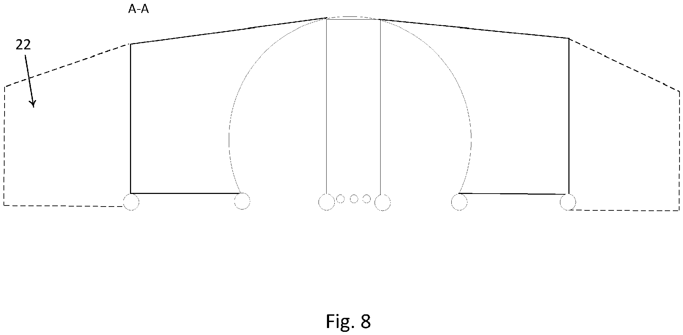

With reference to figure 8, one embodiment of a poultry run 22 arranged on the outer element is illustrated. In the illustrated embodiment, the poultry run 22 is in a lowered configuration, where the bottom of the poultry run 22 configured to be in connection with the ground. The poultry run 22 is assembled using hinged connection, so as to allow it to shift from a lifted configuration to a lowered configuration and vice versa. Typically, the roof in the poultry run 22 is made by a combination of mesh and a more stiff material, being a material with less flex, so as the poultry run 22 may be lifted to a lifted configuration. In a lifted configuration the poultry run is lifted at least 10 cm above the ground, such as at least 20 cm above the ground, such as at least 40 cm above the ground, such as at least 50 cm above the ground.

The poultry run 22 increase the welfare of the poultry inside the mobile self-propelled poultry house, as it allows the poultry to be on the grass without the risk of external birds, predators and poultry to be in connection with the poultry. Furthermore, it minimizes the risk of poultry escaping.

The poultry run 22 is typically lifted to a lifted configuration when the mobile self-propelled poultry house is moving using the propelling device, and may be connected to a hydraulic motor 10. In other embodiments, the poultry run 22 is operated by a secondary motor, where the secondary motor is powered by a solar panel.

Although the present invention has been described in connection with the specified embodiments, it should not be construed as being in any way limited to the presented examples. The scope of the present invention is set out by the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

List of reference symbols:
- 1: force generating element
- 2: first boom
- 3: second boom
- 4: poultry house
- 5: elongate element
- 6: ground penetrating element
- 7: battery
- 8: solar panel
- 9: ventilation
- 10: hydraulic motor
- 11: propelling device
- 12: fluid container
- 13: outer element
- 14: connecting element
- 15: nesting box
- 16: conduit
- 17: feed container
- 18: perch
- 19: funnel
- 20: technical device (room)
- 21: inner compartment
- 22: poultry run

## Claims

1. A mobile self-propelled poultry house comprising a frame arranged underneath the poultry house (4) and being configured to carry the poultry house (4), the frame comprising a plurality of elongate elements (5) extending in a longitudinal direction and connected to each other by transverse going connection means, wherein the elongate elements (5) are configured to have a slidable surface at least on an outer surface facing towards the ground, the frame being connected at a first preselected position to a propelling device (11), the propelling device (11) comprising
∘ an extending element comprising a first boom (2) and a second boom (3), wherein the second boom (3) is rotatably connected to the first boom (2) at a second preselected position along the second boom (3);
∘ a ground penetrating element (6) rotatably attached to one end of the second boom (3) and configured to be ground penetrating;
∘ a force generating element (1) rotatably connected in one end to the frame at a third preselected position and in the other end rotatably connected to the second boom (3) at a fourth preselected position; and
∘ a power unit connected to the force generating element (1) and further configured to be connectable to an electricity source, such as a battery;
wherein the propelling device is configured to move the poultry house from one geographical position to another geographical position.

2. A mobile self-propelled poultry house according to claim 1, wherein the elongate elements (5) are tubular.

3. A mobile self-propelled poultry house according to any of claims 1 or 2,
wherein the elongate elements (5) are filled with a material with a density above 500 kg per m³, such as a density above 800 kg per m³, such as a density above 1000 kg per m³, preferably a high-density material, preferably the high-density material is concrete, such as a density being higher than the density of water.

4. A mobile self-propelled poultry house according to any of the preceding claims, wherein the elongate elements (5) are made of a polymeric material, such as a synthetic plastic, such as a biopolymer.

5. A mobile self-propelled poultry house according to any of the preceding claims, wherein the poultry house (4) further comprising at least one rolling device, such as a wheel, such as a caterpillar wheel connected to the frame.

6. A mobile self-propelled poultry house according to any of the preceding claims, wherein the poultry house further comprises a second propelling device (11) connected to the frame on a fifth preselected position, preferably the fifth preselected position is on a side of the frame being the same side as the first preselected position.

7. A mobile self-propelled poultry house according to claim 6, wherein the first and second propelling devices (11) are arranged at opposite sides of the frame.

8. A mobile self-propelled poultry house according to any of claims 6-7, wherein the propelling devices (11) are operated independent of each other.

9. A mobile self-propelled poultry house according to any of the preceding claims, wherein the force generating element (1) is hydraulically operated.

10. A mobile self-propelled poultry house according to any of the preceding claims, wherein the frame further comprises tubular fluid container 12 arranged between the elongate elements and configured to contain a fluid, such as water, such as drinking water.

11. A mobile self-propelled poultry house according to any of the preceding claims, wherein the poultry house moves from one geographical position to another geographical position based on receiving a signal comprising a GPS location.

12. A mobile self-propelled poultry house according to any of the preceding claims, wherein the slidable surface is made from a material having a low coefficient of friction, preferably the slidable surface is applied with a lubricant, such as a light oil, such as wax, such as silicone.

13. A mobile self-propelled poultry house according to any of the preceding claims, wherein the mobile self-propelled poultry house is flat packed.

14. A method for moving a mobile self-propelled poultry house, the method comprises
- providing a poultry house as claimed in any of claims 1-13;
- sending a signal to move the poultry house from one geographical position to another geographical position, preferably the signal includes a GPS position of the targeted geographical position;
- receiving the signal by a receiver in the power unit;
- activating the propelling device by placing ground penetrating element in the ground;
- activating the propelling device by extending the force generating element, so as to provide a propulsion of the poultry house;
- Activating the propelling device by retracting the force generating element into a neutral position, while the ground penetrating element is not placed in the ground;
thereby moving the mobile self-propelled poultry house.
